# EUROPÄISCHE PATENTSCHRIFT

(11) **EP 3 835 642 B1**
(45) Veröffentlichungstag und Bekanntmachung des Hinweises auf die Patenterteilung: **21.08.2024**
(21) Anmeldenummer: 20211305.6
(22) Anmeldetag: 02.12.2020
(51) Int. Cl.: F16M 11/04, F16M 13/00, F16M 13/02, B60R 11/02, H04M 1/04

(54) **HALTERUNGSVORRICHTUNG FÜR MOBILE ENDGERÄTE AM BEDIENPULT EINES SCHIENENFAHRZEUGES**
MOUNTING DEVICE FOR MOBILE END DEVICES ON THE CONTROL PANEL OF A RAIL VEHICLE
DISPOSITIF DE SUPPORT D'APPAREILS MOBILES SUR LE TABLEAU DE BORD D'UN VÉHICULE FERROVIAIRE

(30) Priorität: 09.12.2019 DE 102019133594
(43) Veröffentlichungstag der Anmeldung: 16.06.2021
(73) Patentinhaber: ALSTOM Holdings, 93400 Saint-Ouen-sur-Seine (FR)
(72) Erfinder: Bialoscek, André, 14482 Potsdam (DE)
(74) Vertreter: Zimmermann & Partner Patentanwälte mbB

(56) Entgegenhaltungen:
- DE-B3- 102013 206 692
- FR-A1- 3 035 042
- KR-U- 20160 000 276
- US-A1- 2018 345 875

## Beschreibung

### Technisches Gebiet

Die vorliegende Erfindung betrifft eine Halterungsvorrichtung für mobile Endgeräte zur Befestigung am Bedienpult eines Schienenfahrzeuges.

### Vorbekannter Stand der Technik

Mobile Endgeräte, wie Tabletcomputer und Smartphones, nehmen eine zunehmend wichtige Rolle im Arbeitsalltag von Triebfahrzeugführern ein. So erlaubt beispielsweise die Verwendung von Tabletcomputern dem Triebfahrzeugführer einen bedienungsfreundlichen und schnellen Zugriff auf Informationen über aktuelle Betriebsanweisungen, Fahrtenbücher und vieles mehr.

Zur Verwendung mobiler Endgeräte am Bedienpult des Triebfahrzeuges wird dieses beispielsweise auf einer freien Fläche des Bedienpultes abgelegt oder bei Bedarf in die Hand genommen.

In verschiedenen anderen Anwendungsbereichen, kann eine vereinfachte Benutzung von mobilen Endgeräten mit Halterungsvorrichtungen ermöglicht werden. So gibt es verschiedene Modelle für Smartphones und Tabletcomputer, die beispielsweise auf einer Tischplatte aufgestellt werden können, sodass ein Verwender des mobilen Endgeräts selbiges weder halten noch sich über die Tischplatte beugen muss. Andere Modelle sind auf die Befestigung mobiler Endgeräte im Kraftfahrzeug ausgelegt. So beschreibt die DE 10 2016 209 168 A1 beispielsweise eine Tablet-Halterung, die an der Mittelkonsole eines Kraftfahrzeuges angebracht werden kann. Die WO 2012/138699 A1 beschreibt eine Tablet-Halterung, die an der Rückenlehne eines vorderen Fahrzeugsitzes angebracht werden kann. DE 10 2013 206 692 B3, FR 3 035 042 A1, KR 201 6 0000276 U und US 201 81345875 A1 beschreiben jeweils eine Halterung für ein elektronisches Gerät.

### Nachteile des Standes der Technik

Die bisher bekannten Lösungen zur Verwendung von mobilen Endgeräten sind für den Schienenfahrzeugbau ungeeignet und können bei Benutzung gesundheitliche Probleme für den Triebfahrzeugführer aufgrund ungünstiger Ergonomie nach sich ziehen und dadurch auch zu Gefahren für den Schienenverkehr führen.

Beispielsweise ist längeres oder häufiges Betrachten eines mobilen Endgeräts, das auf einer freien Fläche vor dem Triebfahrzeugführer liegt, als ergonomisch bedenklich einzustufen.

Des Weiteren kann die Ablage des mobilen Endgeräts auf dem Bedienpult eine Ablenkung des Triebfahrzeugführers vom Schienenverkehr bedingen. Dies kann beispielsweise durch ein Verrutschen des mobilen Endgeräts erfolgen, aber auch dadurch, dass der Triebfahrzeugführer bei der Betrachtung eines vor ihm liegenden mobilen Endgeräts herabsehen muss. Zudem kann die flache Ablage des mobilen Endgeräts unerwünschte Reflektionen auf der Frontscheibe des Triebfahrzeuges hervorrufen.

Bisherige Halterungsvorrichtungen eignen sich für die Verwendung an einem Bedienpult eines Schienenfahrzeuges nur unzureichend, weil sie beispielsweise nicht befestigbar sind und daher bei (Voll-) Bremsungen eine Gefahr darstellen können, oder weil sie bestimmte Strukturen zur Befestigung benötigen, die ein Triebfahrzeug nicht aufweist.

### Problemstellung

Aufgabe der vorliegenden Erfindung ist es, eine Halterungsvorrichtung für mobile Endgeräte bereitzustellen, die das sichere befestigen des mobilen Endgeräts an einem Bedienpult eines Schienenfahrzeuges erlaubt, für verschiedene Bedienpulte und/oder mobile Endgeräte flexibel nutzbar ist und/oder kostengünstig herstellbar ist.

### Erfindungsgemäße Lösung

Die obige Aufgabe wird durch eine Halterungsvorrichtung nach Anspruch 1 gelöst. Vorteilhafte Ausführungsformen ergeben sich aus den abhängigen Unteransprüchen.

Die erfindungsgemäße Halterungsvorrichtung kann insbesondere für das Halten eines mobilen Endgeräts ausgelegt sein. Der Begriff "mobiles Endgerät" umfasst im Folgenden insbesondere Geräte, die mit einem Touchscreen ausgestattet sind. Beispielsweise werden Tabletcomputer und Smartphones umfasst. Die mobilen Endgeräte können beispielsweise eine Bildschirmdiagonale von 4 bis 14 Zoll aufweisen, vorzugsweise 6 bis 12 Zoll.

Gemäß der Erfindung umfasst die Halterungsvorrichtung für mobile Endgeräte zur Befestigung an einem Bedienpult für Schienenfahrzeuge ein Basiselement, einen am Basiselement festlegebaren Halterungsarm, ein am Halterungsarm angeordnetes oberes Aufnahme-Element und ein am Basiselement festgelegtes unteres Aufnahme-Element. Das Basiselement weist eine Oberseite und eine der Oberseite gegenüberliegende Unterseite auf. Die Unterseite ist zumindest abschnittsweise an eine Oberflächenkontur des Bedienpultes angepasst, sodass das Basiselement an dem Bedienpult festgelegt werden kann. Das untere Aufnahme-Element ist dazu ausgelegt eine erste Kante eines mobilen Endgeräts zu umgreifen und das obere Aufnahme-Element ist dazu ausgelegt, eine zweite Kante des mobilen Endgeräts zu umgreifen, wobei die erste Kante der zweiten Kante gegenüberliegt. Das mobile Endgerät kann mittels des unteren Aufnahme-Elements und des oberen Aufnahme-Elements festgeklemmt werden, sodass das mobile Endgerät gehalten wird.

Durch eine auf die Oberflächenkontur eines Bedienpultes zumindest abschnittweise angepasste Unterseite des Basiselements kann das Basiselement am Bedienpult - insbesondere über einen flächigen Kontakt mit der Oberflächenkontur des Bedienpults - festgelegt werden. Eine Befestigung kann beispielsweise durch eine flächige Verklebung mindestens eines Teils der Unterseite oder mittels Verschraubung zwischen Bedienpult und Basiselement gewährleistet werden. Das Basiselement kann damit - selbst bei einer Vollbremsung - einen festen Stand der Halterungsvorrichtung sichern.

Erfindungsgemäß weist die Unterseite des Basiselements eine zumindest abschnittsweise gekrümmte Fläche auf. Durch die zumindest abschnittsweise gekrümmte Fläche kann beispielweise die Anpassung an die Oberflächenkontur des Bedienpultes erreicht werden, da die Oberflächenkontur vieler Bedienpulte gekrümmte Abschnitte aufweist.

Der Halterungsarm ist am Basiselement festlegbar. In einer Ausgestaltungsform erstreckt sich der Halterungsarm schräg vom Basiselement weg, sodass der Halterungsarm und das Basiselement zusammen einen Winkel α einschließen. Der Winkel α kann beispielsweise ein spitzer Winkel sein. Ein zwischen dem oberen und dem unteren Aufnahme-Element aufgenommenes mobiles Endgerät liegt dem Winkel α bevorzugt gegenüber. Ein zwischen dem oberen und dem unteren Aufnahme-Element aufgenommenes mobiles Endgerät liegt bevorzugt zwischen den Abschnitten des Halterungsarm und des Basiselement die zusammen den Winkel α einschließen.

In einer Ausgestaltungform sind der Halterungsarm und das Basiselement miteinander lösbar verbunden. Die Halterungsvorrichtung kann beispielsweise eine modulare Halterungsvorrichtung bilden. In einer Ausgestaltungsform kann der Halterungsarm derart ausgelegt sein, dass er mit Basiselementen verbunden werden kann, die jeweils verschiedene Unterseiten aufweisen. Auf diese Weise kann stets der gleiche Halterungsarm für die Halterungsvorrichtung Verwendung finden, wohingegen das Basiselement jeweils so gewählt wird, dass es zum jeweiligen Bedienpult des Schienenfahrzeuges passt. Eine modulare Halterungsvorrichtung kann zudem erlauben, dass ein am Bedienpult festgelegtes Basiselement mit verschieden langen und/oder angewinkelten Halterungsarmen kombiniert werden kann. So kann beispielsweise auf verschiedene Körpergrößen der Triebfahrzeugführer reagiert werden, ohne die ganze Halterungsvorrichtung abnehmen zu müssen. Bei einem Defekt am Basiselement oder dem Halterungsarm muss zudem nicht die ganze Halterungsvorrichtung ausgetauscht werden, sondern es genügt der Austausch nur eines der Elemente.

In einer Ausgestaltungsform ist der Halterungsarm mit dem Basiselement beweglich verbunden. Eine Bewegung des Halterungsarms relativ zum Basiselement kann der Halterungsvorrichtung ermöglichen zum Beispiel die Neigung des gehaltenen mobilen Endgeräts gegenüber einem Verwender einzustellen.

Beispielsweise kann der Halterungsarm entlang der Oberseite des Basiselements translatorisch verschiebbar sein. Die translatorische Verschiebung kann eindimensional erfolgen, beispielsweise auf einer Schiene.

In einer Ausgestaltungsform weist der Halterungsarm eine Nut auf, während das Basiselement, zum Beispiel auf seiner Oberseite, eine in die Nut eingreifende langgestreckte Schiene aufweist. Der Halterungsarm kann dann entlang der in die Nut eingreifenden Schiene translatorisch verschoben werden.

In einer weiteren Ausgestaltungsform weist das Basiselement, zum Beispiel auf seiner Oberseite, eine Nut auf, während der Halterungsarm eine in die Nut eingreifende langgestreckte Schiene aufweist. Der Halterungsarm kann dann über die Schiene entlang der Nut translatorisch verschoben werden.

Alternativ oder zusätzlich kann der Halterungsarm ein Langloch aufweisen. Das Basiselement kann ein durch das Langloch greifendes Befestigungsmittel wie zum Beispiel eine Schraube aufweisen. Der Halterungsarm kann entlang der Oberseite des Basiselements verschoben werden und mittels des Befestigungselements an verschiedenen Positionen am Basiselement, insbesondere der Oberseite des Basiselements, (lösbar) fixiert werden.

Alternativ oder zusätzlich kann der Halterungsarm derart mit dem Basiselement verbunden sein, dass der Halterungsarm in seiner Neigung einstellbar und/oder schwenkbar ist. Beispielsweise kann der Halterungsarm über ein Gelenk am Basiselement schwenkbar sein. Ein Gelenk könnte zum Beispiel ein Kugelgelenk am Halterungsarm sein, das mit einer Gelenkpfanne des Basiselements verbunden ist. In einer Ausgestaltungsform kann der Halterungsarm gegenüber der Oberseite des Basiselements schwenkbar sein, sodass ein zwischen dem Halterungsarm und dem Basiselement eingeschlossener Winkel α variabel ist. Das Gelenk kann alternativ im Halterungsarm angeordnet sein. Der Halterungsarm ist dann beispielsweise zweiteilig, beispielsweise mit einer unteren Halterungsarm-Komponente, der mit dem Basiselement verbunden ist, und einer oberen Halterungsarm-Komponente, die mit der unteren Halterungsarm-Komponente über das Gelenk verbunden ist.

In einer Ausgestaltungsform ist der Halterungsarm relativ zum Basiselement in einer gewünschten Position arretierbar.

Das obere und das untere Aufnahme-Element sind dazu ausgelegt, jeweils eine Kante des zu haltenden mobilen Endgeräts zu umgreifen, sodass das mobile Endgerät zum Beispiel zwischen dem oberen und unteren Aufnahme-Element festgeklemmt ist. Durch das Umgreifen von zwei gegenüberliegenden Kanten und/oder durch das Festklemmen kann das mobile Endgerät sicher von der Halterungsvorrichtung aufgenommen werden, sodass ein Verrutschen oder ein Herausfallen des mobilen Endgeräts, zum Beispiel bei einer steilen Kurve oder einer starken Bremsung verhindert werden kann. Damit kann sowohl eine Ablenkung des Triebfahrzeugführers verhindert werden als auch ein Schaden am mobilen Endgerät durch Herabstürzen.

Das obere Aufnahme-Element kann zum Umgreifen der Kante des mobilen Endgeräts beispielsweise eine Nut aufweisen. Alternativ oder zusätzlich kann auch das untere Aufnahme-Element zum Umgreifen der Kante des mobilen Endgeräts eine Nut aufweisen. Die Nut kann im Innenquerschnitt von einer offenen Seite zu einer geschlossenen Seite der Nut schmal zulaufend ausgebildet sein. Ein breiterer Bereich der Nut des oberen Aufnahme-Elements ist dabei vorzugsweise dem unteren Aufnahme-Element zugewandt. Ein breiterer Bereich der Nut des unteren Aufnahme-Elements ist dabei vorzugsweise dem oberen Aufnahme-Element zugewandt.

Typischerweise kann die Nut einen keilförmigen oder einen trapezförmigen Innenquerschnitt aufweisen. Eine Trapezform beschreibt dabei insbesondere ein Trapez mit zwei zueinander geneigten Schenkeln (nicht parallele Schenkel). Eine offene Seite der Nut im Innenquerschnitt bildet dabei eine längere Grundseite der Trapezform. Eine geschlossene Seite der Nut im Innenquerschnitt bildet eine kürzere Grundseite der Trapezform.

Ein schmaler werdender Innenquerschnitt kann das Umgreifen von verschieden dicken Kanten mobiler Endgeräte erlauben. Während die Kanten mobiler Endgeräte mit einer geringen Dicke in einem schmaleren Bereich des beispielsweise trapezförmigen Innenquerschnitt gegriffen werden, werden die Kanten mobiler Endgeräte mit einer stärkeren Dicke bereits in einem breiteren Bereich des trapezförmigen Innenquerschnitt gegriffen. Die Nut kann somit erlauben, jeweils eine Kante von einer Vielzahl von mobilen Endgeräten mit verschiedenen Dicken bzw. Kanten von mobilen Endgeräten mit und ohne Schutzhülle umgreifen.

Die Nut des oberen und/oder des unteren Aufnahme-Elements kann eine durchlaufende Nut sein, die sich über eine Länge des oberen bzw. des unteren Aufnahme-Elements erstreckt. Die Nut des oberen und/oder des unteren Aufnahme-Elements kann eine einseitig oder beidseitig abgesetzte Nut sein. Die Nut des oberen und/oder des unteren Aufnahme-Elements kann mehrteilig sein, insbesondere, kann die Nut zweigeteilt sein, sodass eine Kante eines mobilen Endgeräts an einer linken und einer rechten Seite der Kante von der zweiteiligen Nut umgriffen wird. Eine Nut, die sich nicht über die ganze umgriffene Kante erstreckt, erlaubt typischerweise eine Materialersparnis. Gleichzeitig kann beim Umgreifen einer linken und einer rechten Seite der Kante mit einer zweiteiligen Nut eine ähnliche Stabilität der umgriffenen Kante erhalten werden, wie bei einer durchlaufenden Nut.

In einem Ausgestaltungsbeispiel ist das untere Aufnahmeelement starr mit dem Basiselement verbunden bzw. mit diesem integral ausgebildet. Das untere Aufnahmeelement kann aber auch lösbar mit dem Basiselement verbunden sein und/oder aus einem anderen Material als das Basiselement bestehen.

Das untere Aufnahme-Element kann eine langgestreckte Form aufweisen. In einer Ausgestaltungsform weisen das Basiselement und das am Basiselement festgelegte untere Aufnahme-Element zusammen eine T-Form auf. Beispielsweise formt das Basiselement den vertikalen Balken des "T" und das untere Aufnahmeelement formt den horizontalen Balken des "T".

Das untere Aufnahme-Element kann mit einem rutschfesten Material ausgestattet sein. Beispielsweise kann innerhalb der Nut des unteren Aufnahme-Elements, mit der die erste Kante des mobilen Endgeräts umgriffen werden kann, rutschfestes Material aufgebracht werden. Das rutschfeste Material kann beispielsweise in einer oder mehreren Vertiefungen entlang der Nut (formschlüssig) eingebracht werden. Dies kann die Haltbarkeit des rutschfesten Materials am unteren Aufnahme-Element erhöhen, da Ecken und Kanten des rutschfesten Materials teilweise durch die Vertiefungen geschützt sind und so weniger Einflüssen ausgesetzt sind, die zu einem Ablösen des rutschfesten Material führen können. Typischerweise kann das rutschfeste Material aus der Vertiefung überstehen, beispielsweise 3 mm. Das rutschfeste Material kann beispielsweise streifenförmig sein. Durch das rutschfeste Material kann ein Verrutschen der ersten Kanten des mobilen Endgeräts bei Erschütterungen oder Bremsungen verhindert werden.

Das am Basiselement festgelegte untere Aufnahme-Element kann eine Unterseite aufweisen. Die Unterseite des unteren Aufnahme-Elements kann zumindest abschnittsweise an die Oberflächenkontur des Bedienpultes angepasst sein. Dies ermöglicht zum Beispiel eine noch größere Kontaktfläche der Halterungsvorrichtung mit dem Bedienpult und kann zu einer noch sichereren und/oder stabileren Befestigung beitragen.

Das untere Aufnahme-Element kann eine Ausnehmung zur Aufnahme eines Steckers und/oder eines Kabels aufweisen. Die Aufnahme kann insbesondere dazu ausgelegt sein, einen Stecker aufzunehmen, der in einer Steckerbuchse des von der Halterungsvorrichtung gehaltenen mobilen Endgeräts eingesteckt ist.

Das obere Aufnahme-Element kann dem unteren Aufnahme-Element gegenüber derart angeordnet sein, dass es über das untere Aufnahme-Element hinausragt. Ein zwischen dem oberen Aufnahme-Element und dem unteren Aufnahme-Element festgeklemmtes mobiles Endgerät kann somit gegenüber der Oberseite des Basiselements in einem Winkel β geneigt sein.

Ein Hinausragen des oberen Aufnahme-Elements über das untere Aufnahme-Element, wobei ersteres dazu ausgelegt ist die zweite Kante des mobilen Endgeräts zu umgreifen und letzteres dazu ausgelegt ist, die ersten Kante des mobilen Endgeräts zu umgreifen, führt bei Halterung des mobilen Endgeräts dazu, dass die zweite Kante weiter nach vorne geneigt ist als die erste Kante.

Das obere und das untere Aufnahmeelement können in horizontaler Richtung zueinander versetzt angeordnet sein. Eine "horizontale Richtung" bezeichnet dabei eine Richtung, die von vorn nach hinten bzw. von hinten nach vorne verläuft, typischerweise in Erstreckung des Basiselements. Eine "vertikale Richtung" beschreibt eine Richtung, die von oben nach unten bzw. von unten nach oben verläuft. Das obere Aufnahme-Element liegt in vertikaler Richtung oberhalb des unteren Aufnahme-Elements.

Gemäß einer Ausführungsform definiert das obere Aufnahme-Element ein oberes Vorderende der Halterungsvorrichtung und das untere Aufnahme-Element definiert ein unteres Vorderende der Halterungsvorrichtung. Vorzugsweise ragt das obere Vorderende in horizontaler Richtung über das untere Vorderende hinaus. Bei Halterung des mobilen Endgeräts neigt sich eine obere Kante (d.h. die zweite Kante) des mobilen Endgeräts weiter nach vorne als eine untere Kante (d.h. die erste Kante). Beispielsweise kann ein zwischen dem oberen Aufnahme-Element und dem unteren Aufnahme-Element festgeklemmtes mobiles Endgerät mit dem Basiselement einen dem Halterungsarm gegenüberliegenden stumpfen Winkel einschließen.

Anders ausgedrückt kann man sagen, dass eine vertikale Projektion des unteren Aufnahme-Elements auf eine horizontale Ebene einem Schnittpunkt der Ebene mit dem Halterungsarm näher gelegen ist, als eine vertikale Projektion des oberen Aufnahme-Elements in vertikaler Projektion auf die Ebene. Die horizontale Ebene kann beispielsweise durch die Oberseite des Basiselements definiert werden. Ein zwischen dem oberen Aufnahme-Element und dem unteren Aufnahme-Element festgeklemmtes mobiles Endgerät kann so mit dem Basiselement einen dem Halterungsarm gegenüberliegenden stumpfen Winkel einschließen.

Eine Neigung des mobilen Endgeräts, bei dem die zweite (obere) Kante weiter nach vorne geneigt ist als eine erste (untere) Kante, ermöglicht einem Verwender beispielsweise von schräg unten auf die Anzeige des mobilen Endgeräts zu schauen. Dies kann sich insbesondere bei einer Befestigung der Halterungsvorrichtung an einem Bedienpult als vorteilhaft erweisen. Relativ zur Augenhöhe des Triebfahrzeugführers weisen die Bedienpulte mitunter hoch gelegene Oberflächen auf. Ein auf einer höheren Oberfläche angebrachtes mobiles Endgerät, dessen Anzeige nach unten ausgerichtet ist, ermöglicht dem tiefer sitzenden Triebfahrzeugführer somit eine entspannte Körperhaltung bei der Betrachtung und Verwendung des mobilen Endgeräts. Eine Neigung des mobilen Endgeräts, bei der die zweite Kante weiter nach vorne geneigt ist als die erste Kante, kann zudem dazu genutzt werden, Reflektionen der Anzeige des mobilen Endgeräts in der Frontscheibe zu verhindern.

In einer Ausgestaltungsform ist das obere Aufnahme-Element am Halterungsarm festgelegt. Das obere Aufnahme-Element kann beispielsweise eine elastische Klemme umfassen. Die elastische Klemme kann zur Aufnahme der zweiten Kante des mobilen Endgeräts unter Krafteinwirkung leicht aufgebogen werden. Anschließend kann die elastische Klemme in ihren Ausgangszustand zurückkehren und die zweite Kante umgreifen.

In einer Ausgestaltungsform ist das obere Aufnahme-Element entlang des Halterungsarms verschiebbar. Damit kann gewährleistet werden, dass ein Abstand zwischen dem unteren und dem oberen Aufnahme-Element anpassbar ist. Insbesondere kann der Abstand auf eine Größe des mobilen Endgeräts angepasst werden. Eine Anpassung des Abstands zwischen dem unteren und dem oberen Aufnahme-Element erlaubt zudem zwischen Querformat und Längsformat beim selben mobilen Endgerät zu wechseln.

Der Halterungsarm kann beispielsweise eine Längsführung aufweisen. Das obere Aufnahmeelement kann dann über die Längsführung entlang des Halterungsarms verschoben werden. Die Längsführung des Halterungsarms kann beispielsweise ein Langloch umfassen. Das obere Ausnahmeelement kann mit einem durch das Langloch des Halterungsarms hindurchgreifenden Befestigungsmittel an einer Position des Langlochs des Halterungsarms fixiert werden. Das Befestigungsmittel kann beispielsweise eine Schraube umfassen, z.B. eine Rändelschraube oder eine Schraube mit Flügelmutter.

Gemäß einer Ausgestaltungsform umfasst der Halterungsarm eine obere und eine untere Halterungsarm-Komponente. Der Halterungsarm kann beispielsweise zweiteilig sein. Das obere Aufnahme-Element kann an der oberen Halterungsarm-Komponente angeordnet sein. Das obere Aufnahme-Element kann insbesondere an der oberen Halterungsarm-Komponente festgelegt sein. Der Halterungsarm kann derart gestaltet sein, dass die obere Halterungsarm-Komponente entlang der unteren Halterungsarm-Komponente verschiebbar ist. Durch die Verschiebbarkeit kann ein Abstand zwischen dem unteren und dem oberen Aufnahme-Element auf eine Größe oder ein Format des mobilen Endgeräts angepasst werden.

Die untere Halterungsarm-Komponente kann beispielsweise eine Längsführung aufweisen und die obere Halterungsarm-Komponente über die Längsführung der unteren Halterungsarm-Komponente entlang des Halterungsarms verschoben werden. Die Längsführung der unteren Halterungsarm-Komponente kann beispielsweise ein Langloch umfassen. Die obere Halterungsarm-Komponente kann mit einem durch das Langloch hindurchgreifenden Befestigungsmittel an einer Position des Langlochs der unteren Halterungsarm-Komponente fixiert werden. Das Befestigungsmittel kann beispielsweise eine Schraube umfassen, z.B. eine Rändelschraube oder eine Schraube mit Flügelmutter.

Gemäß einer Ausgestaltungsform ist der Halterungsarm einstückig ausgebildet. Typischerweise kann der Halterungsarm starr sein. Ein starrer Halterungsarm umfasst insbesondere keine Gelenke. Der Halterungsarm kann damit relativ einfach und/oder kostengünstig in der Herstellung sein. Der Halterungsarm kann beispielsweise über 3D-Druck oder Spritzgussverfahren fertigbar sein. Des Weiteren ist ein solcher Halterungsarm weitgehend robust und/oder weist nur wenige Schwachpunkte auf, die im Laufe der Verwendung einen Schaden nehmen können. Dies trägt zu einer langen Haltbarkeit der Halterungsvorrichtung bei.

Ein Material der Halterungsvorrichtung oder einzelner Komponenten davon kann insbesondere Kunststoff umfassen.

Die vorstehend beschriebenen Ausgestaltungsbeispiele können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.
Figur 1 zeigt eine schematische Darstellung einer Halterungsvorrichtung für Tabletcomputer gemäß einem Ausführungsbeispiel.
Figur 2 zeigt die in Figur 1 dargestellte Halterungsvorrichtung aus einer weiteren Perspektive.
Figur 3 zeigt eine schematische Darstellung einer Halterungsvorrichtung für Tabletcomputer gemäß einem weiteren Ausführungsbeispiel.
Figur 4 zeigt eine schematische Darstellung einer Halterungsvorrichtung für Tabletcomputer gemäß einem Ausführungsbeispiel.
Figur 4A zeigt den Ausschnitt S der Figur 4 vergrößert.

### Ausführungsbeispiele

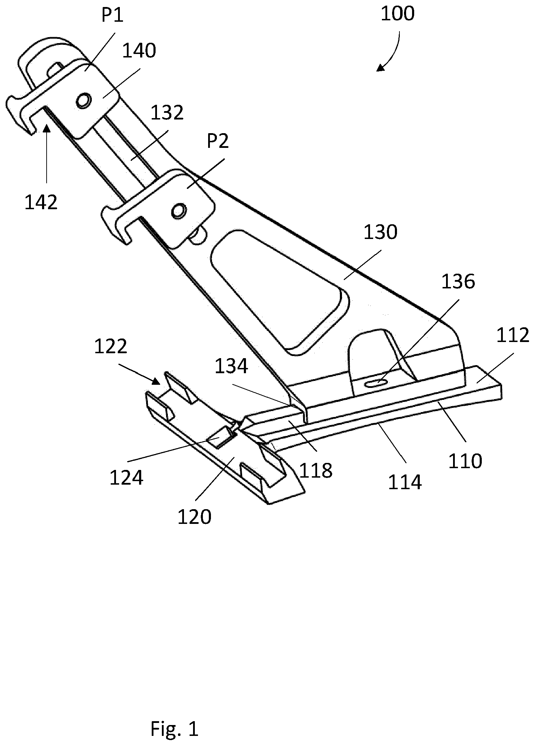

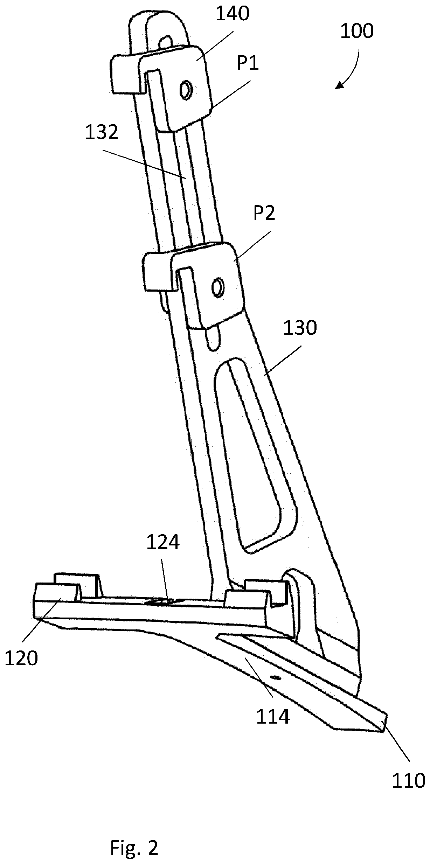

Figur 1 zeigt eine schematische seitliche Ansicht einer Halterungsvorrichtung 100 gemäß einem Ausführungsbeispiel. Figur 2 zeigt eine schematische untere Ansicht der Halterungsvorrichtung aus Fig. 1.

Die Halterungsvorrichtung umfasst ein Basiselement 110, einen Halterungsarm 130 sowie ein oberes und ein unteres Aufnahme-Element 140, 120.

Das Basiselement 110 weist eine Oberseite 112 und eine Unterseite 114 auf, wobei die Unterseite 114 der Oberseite 112 gegenüberliegt. Die Unterseite 114 des Basiselements 110 ist bevorzugt derart ausgestaltet, dass sie zumindest abschnittsweise an eine Oberflächenkontur angepasst ist, die das Bedienpult aufweist, an dem die Halterungsvorrichtung 100 befestigt werden soll.

Eine solche Anpassung an die Oberflächenkontur eines Bedienpultes besteht erfindungsgemäß in einer zumindest abschnittsweise gekrümmten Fläche an der Unterseite 114 des Basiselements 110. Die gekrümmte Fläche ist beispielsweise in Fig. 2 illustriert.

Der Halterungsarm 130 ist am Basiselement 110 festlegbar. In Fig. 1 ist der Halterungsarm 130 über eine Schiene 118 auf der Oberseite 112 des Basiselements 110 mit dem Basiselement beweglich verbunden. Der Halterungsarm 130 weist eine Nut 134 auf, in die die Schiene 118 eingreifen kann. Entlang der Schiene 118 kann der Halterungsarm 130 über die Nut 134 translatorisch verschoben werden. Dies ermöglicht beispielsweise die Neigung eines von der Halterungsvorrichtung gehaltenen mobilen Endgeräts zu variieren.

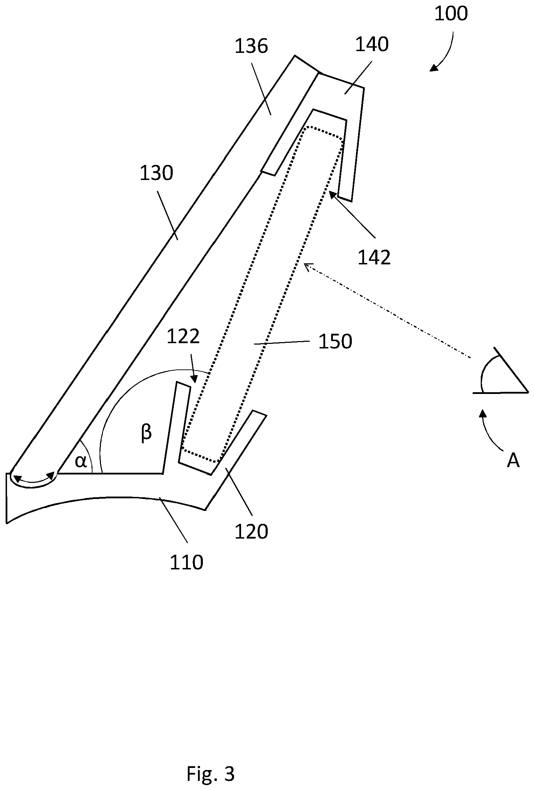

In Fig. 1 erstreckt sich der Halterungsarm 130 schräg vom Basiselement 110 weg. Der Halterungsarm 130 und das Basiselement 110 schließen zusammen einen Winkel α ein. Der zwischen dem Halterungsarm 130 und dem Basiselement 110 eingeschlossene Winkel α ist beispielhaft in Fig. 3 illustriert und beschreibt insbesondere einen spitzen Winkel.

Der Halterungsarm 130 weist ein Langloch 136 auf. Über ein in das Langloch 136 eingreifendes Befestigungsmittel (nicht gezeigt) kann der Halterungsarm 130 entlang der Oberseite 112 Basiselements 110 an verschiedenen Positionen am Basiselement 110 fixiert werden.

Das untere Aufnahme-Element 120 ist am Basiselement 110 festgelegt. Fig. 1 zeigt das untere Aufnahme-Element 120 mit einer langgestreckten Form. Das untere Aufnahme-Element 120 weist zusammen mit dem Basiselement 110 eine T-Form auf.

Das untere Aufnahme-Element 120 kann eine Unterseite aufweisen, wie sie beispielsweise in Fig. 2 dargestellt ist. Die Unterseite des unteren Aufnahme-Elements 120 kann zumindest abschnittsweise an die Oberflächenkontur des Bedienpultes angepasst sein.

Wie in Fig. 1 dargestellt, kann das untere Aufnahme-Element 120 eine Ausnehmung 124 aufweisen. Die Ausnehmung 124 kann zur Aufnahme eines Steckers und/oder eines Kabels dienen. Die Aufnahme kann insbesondere derart ausgestaltet sein, dass sie einen Stecker aufnehmen kann, der in einer Steckerbuchse des von der Halterungsvorrichtung gehaltenen mobilen Endgeräts 150 eingesteckt ist.

Das untere Aufnahme-Element 120 ist dazu ausgelegt, eine erste Kante eines mobilen Endgeräts 150 zu umgreifen. Zum Umgreifen der ersten Kante des mobilen Endgeräts 150 kann das untere Aufnahme-Element 120 eine Nut 122 aufweisen. In Fig. 1 ist die Nut 122 als eine zweigeteilte Nut dargestellt, die eine linke und eine rechte Seite der ersten Kante umgreifen kann. Ein mittlerer Teil der ersten Kante wird somit nicht von der Nut 122 umgriffen. Durch das Umgreifen der linken und der rechten Seite der ersten Kante kann eine ähnliche Stabilität wie bei einer durchlaufenden Nut erreicht werden, bei gleichzeitiger Materialersparnis.

Die Nut 122 des unteren Aufnahme-Elements 120 kann einen trapezförmigen Innenquerschnitt aufweisen, wie er beispielhaft in Fig. 3 dargestellt ist. Die Nut 122 weist damit einen breiteren Bereich im Innenquerschnitt auf und einen schmaleren Bereich. Ein mobiles Endgerät 150 kann je nach Dicke der ersten Kante von dem breiteren Bereich oder dem schmaleren Bereich festgeklemmt werden.

Das obere Aufnahme-Element 140 ist am Halterungsarm 130 angeordnet. Das obere Aufnahme-Element 140 kann entlang des Halterungsarms 130 verschiebbar sein. Die Verschiebung des Aufnahme-Elements 140 erlaubt, einen Abstand zwischen dem unteren und dem oberen Aufnahme-Element 120, 140 einzustellen.

Die Figuren 1 und 2 zeigen das obere Aufnahme-Element in zwei Positionen P1 und P2. In Position P1 ist der Abstand zwischen dem oberen und dem unteren Aufnahmeelement 120, 140 relativ groß, sodass ein relativ großes mobiles Endgerät oder ein mobiles Endgerät in Längsformat zwischen dem oberen und dem unteren Aufnahmeelement 120, 140 festklemmbar ist. In Position P2 ist der Abstand zwischen dem oberen und dem unteren Aufnahmeelement 120, 140 relativ klein, sodass ein relativ kleines mobiles Endgerät oder ein mobiles Endgerät in Querformat zwischen dem oberen und dem unteren Aufnahmeelement 120, 140 festklemmbar ist.

Die Verschiebung des oberen Aufnahme-Elements 140 kann über eine Längsführung 132 erfolgen. In den Figuren 1 und 2 ist die Längsführung beispielhaft als Langloch dargestellt. Das obere Ausnahmeelement 140 kann mit einem durch das Langloch hindurchgreifenden Befestigungsmittel (nicht gezeigt) an einer Position des Langlochs fixiert werden.

Das obere Aufnahme-Element 140 ist dazu ausgelegt, eine zweite Kante eines mobilen Endgeräts 150 zu umgreifen, wobei die zweite Kante der ersten Kante gegenüberliegt. Zum Umgreifen der zweiten Kante kann das obere Aufnahme-Element eine Nut 142 aufweisen. Die Figuren 1 und 2 zeigen das obere Aufnahme-Element 140 mit einer Nut 142, die dazu ausgelegt ist die zweite Kante des mobilen Endgeräts 150 an einem mittleren Punkt der zweiten Kante zu umgreifen.

Die Nut 142 des oberen Aufnahme-Elements kann einen trapezförmigen Innenquerschnitt aufweisen, wie er beispielhaft in Fig. 3 dargestellt ist. Die Nut 142 weist damit einen breiteren Bereich im Innenquerschnitt auf und einen schmaleren Bereich. So können mobile Endgeräte 150 mit zweiten Kanten verschiedener Dicke von dem breiteren Bereich oder dem schmaleren Bereich festgeklemmt werden.

Zur Halterung eines mobilen Endgeräts 150 kann dieses mittels dem oberen und unteren Aufnahme-Element 140, 120 aufgenommen werden. Insbesondere können das obere und das untere Aufnahme-Element 140, 120 ein mobiles Endgerät 150 zwischen einander festklemmen.

Fig. 3 zeigt beispielhaft, wie das mobile Endgerät 150 von der Halterungsvorrichtung 100 gehalten werden kann. Das mobile Endgerät 150 kann derart aufgenommen werden, dass es dem zwischen dem Halterungsarm 130 und dem Basiselement 110 eingeschlossenen (spitzen) Winkel α gegenüberliegt.

Das obere Aufnahme-Element 140 kann dem unteren Aufnahme-Element 120 gegenüber derart angeordnet sein, dass es über das untere Aufnahme-Element 120 hinausragt, sodass ein zwischen dem oberen Aufnahme-Element und dem unteren Aufnahme-Element festgeklemmtes mobiles Endgerät mit der zweiten Kante weiter nach vorne geneigt als mit der ersten Kante, wie dies beispielhaft in Fig. 3 dargestellt ist. Ein zwischen dem mobilen Endgerät 150 und dem Basiselement 110 eingeschlossener Winkel β, der dem Halterungsarm gegenüberliegt, kann daher insbesondere ein stumpfer Winkel sein, wie in Fig. 3 illustriert.

Die Neigung des mobilen Endgeräts mit der oberen zweiten Kante weiter vorne mit der unteren ersten Kante führt dazu, dass die Anzeige des gehaltenen mobilen Endgeräts schräg nach unten gerichtet ist. Die Anzeige ist somit auf einen etwas tiefer gelegenen Verwender A ausgerichtet.

Das Ausführungsbeispiel in Fig. 3 unterscheidet sich in einigen Merkmalen von dem Ausgestaltungsbeispiel auf den Figuren 1 und 2. Auf diese Merkmale soll im Folgenden noch kurz hingewiesen werden.

In Fig. 3 ist der Halterungsarm 130 über ein Gelenk beweglich mit dem Basiselement 110 verbunden. Der Halterungsarm 130 ist damit in seiner Neigung einstellbar schwenkbar und in seiner Neigung einstellbar. Der zwischen dem Halterungsarm 130 und dem Basiselement 110 eingeschlossene Winkel α kann somit variiert werden. Gleichzeitig kann die Neigung eines von der Halterungsvorrichtung gehaltenen mobilen Endgeräts variiert werden.

Fig. 3 zeigt das obere Aufnahme-Element 140 am Halterungsarm 130 festgelegt. Das obere Aufnahme-Element 140 kann beispielsweise eine elastische Klemme umfassen, die das festklemmen eines mobilen Endgeräts erlaubt.

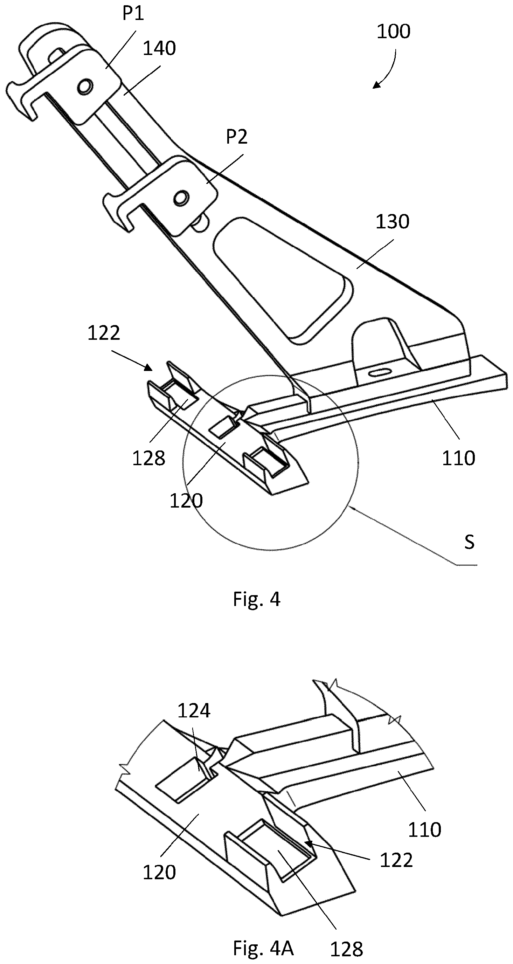

In Fig. 4 und Fig. 4A zeigt eine Ausführungsform der Halterungsvorrichtung, bei der ein rutschfestes Material (nicht gezeigt) innerhalb der Nut 122 des unteren Aufnahme-Elements 120 vorgesehen ist. In Fig. 4 und Fig. 4A umfasst das untere Aufnahme-Element zwei Vertiefungen 128 an jedem Abschnitt der zweigeteilten Nut 122. In diese Vertiefungen kann je ein Streifen rutschfesten Materials formschlüssig eingebracht werden. Typischerweise kann das rutschfeste Material aus der Vertiefung überstehen, beispielsweise 3 mm.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 100: Halterungsvorrichtung
- 110: Basiselement
- 112: Oberseite des Basiselements
- 114: Unterseite des Basiselements
- 118: Schiene des Basiselements
- 120: unteres Aufnahme-Element
- 122: Nut des unteren Aufnahme-Elements
- 124: Ausnehmung im unteren Aufnahme-Element
- 128: Vertiefung für rutschfestes Material
- 130: Halterungsarm
- 132: Längsführung des Halterungsarms
- 134: Nut des Halterungsarms
- 136: Langloch
- 140: oberes Aufnahme-Element
- 142: Nut des oberen Aufnahme-Elements
- 150: mobiles Endgerät
- A: Verwender
- P1: Position 1 des oberen Aufnahme-Elements
- P2: Position 2 des oberen Aufnahme-Elements

## Patentansprüche

1. Halterungsvorrichtung (100) für mobile Endgeräte zur Befestigung an einem Bedienpult eines Schienenfahrzeugs, aufweisend:
ein Basiselement (110) mit einer Oberseite (112) und einer der Oberseite gegenüberliegenden Unterseite (114), die zumindest abschnittsweise an die Oberflächenkontur des Bedienpultes angepasst ist, um das Basiselement (110) an dem Bedienpult festzulegen, wobei die Anpassung an die Oberflächenkontur des Bedienpultes in einer zumindest abschnittsweise gekrümmten Fläche an der Unterseite des Basiselements besteht;
einen am Basiselement (110) festlegebaren Halterungsarm (130),
ein am Basiselement (110) festgelegtes unteres Aufnahme-Element (120), das dazu ausgelegt ist, eine erste Kante eines mobilen Endgeräts (150) zu umgreifen;
ein am Halterungsarm (130) angeordnetes oberes Aufnahme-Element (140), das dazu ausgelegt ist, eine der ersten Kante gegenüberliegende zweite Kante des mobilen Endgeräts zu umgreifen,
wobei zur Halterung des mobilen Endgeräts dieses mittels des unteren Aufnahme-Elements (120) und des oberen Aufnahme-Elements (140) festklemmbar ist.

2. Halterungsvorrichtung nach einem der vorherigen Ansprüche, wobei der Halterungsarm (130) mit dem Basiselement (110) beweglich verbunden ist und relativ zum Basiselement (110) in einer gewünschten Position arretierbar ist.

3. Halterungsvorrichtung nach einem der vorherigen Ansprüche, wobei der Halterungsarm (130) entlang der Oberseite (112) des Basiselements (110) translatorisch verschiebbar und/oder in einer Neigung einstellbar ist.

4. Halterungsvorrichtung nach einem der vorherigen Ansprüche, wobei entweder der Halterungsarm (130) oder die Oberseite (112) des Basiselements (110) eine Nut (134) und das jeweils andere Element eine in die Nut eingreifende langgestreckte Schiene (118) aufweist, wobei der Halterungsarm (130) entlang der in die Nut (134) eingreifenden Schiene (118) translatorisch verschiebbar ist.

5. Halterungsvorrichtung nach einem der vorherigen Ansprüche, wobei der Halterungsarm (130) ein Langloch aufweist und das Basiselement (110) ein durch das Langloch greifendes Befestigungselement aufweist, und der Halterungsarm (130) entlang der Oberseite (112) des Basiselements (110) verschiebbar und mittels des Befestigungselements an verschiedenen Positionen am Basiselement (110) fixierbar ist.

6. Halterungsvorrichtung nach einem der vorherigen Ansprüche, wobei das obere Aufnahme-Element (140) über das untere Aufnahme-Element (120) hinausragt, sodass ein zwischen dem oberen Aufnahme-Element (140) und dem unteren Aufnahme-Element (120) festgeklemmtes mobiles Endgerät gegenüber der Oberseite (112) des Basiselements (110) in einem Winkel β geneigt ist.

7. Halterungsvorrichtung nach einem der vorherigen Ansprüche, wobei sich der Halterungsarm (130) schräg vom Basiselement (110) weg erstreckt, sodass der Halterungsarm (130) und die Oberseite des Basiselements (110) einen spitzen Winkel (α) einschließen, wobei ein zwischen dem oberen Aufnahme-Element (140) und dem unteren Aufnahme-Element (120) festgeklemmtes mobiles Endgerät (150) dem spitzen Winkel gegenüber liegt.

8. Halterungsvorrichtung nach einem der vorherigen Ansprüche, wobei der Halterungsarm (130) gegenüber der Oberseite (112) des Basiselements (110) schwenkbar ist, sodass ein zwischen dem Halterungsarm (130) und dem Basiselement (110) eingeschlossener Winkel α variabel ist.

9. Halterungsvorrichtung nach einem der vorherigen Ansprüche, wobei der Halterungsarm (130) über ein Gelenk am Basiselement (110) schwenkbar ist.

10. Halterungsvorrichtung nach einem der vorherigen Ansprüche, wobei das untere und/oder das obere Aufnahme-Element (120, 140) zum Umgreifen der Kante des mobilen Endgeräts (150) eine Nut (122, 142) mit einem keil- oder trapezförmigen Innenquerschnittaufweist und/oder wobei das obere Aufnahme-Element eine elastische Klemme umfasst.

11. Halterungsvorrichtung nach einem der vorherigen Ansprüche, wobei das obere Aufnahme-Element (140) entlang des Halterungsarms (130) verschiebbar ist, sodass ein Abstand zwischen dem unteren und dem oberen Aufnahme-Element (120, 140) auf eine Größe oder ein Format des mobilen Endgeräts anpassbar ist, insbesondere, wobei der Halterungsarm (130) eine Längsführung (132) aufweist und das obere Aufnahme-Element (140) über die Längsführung (132) des Halterungsarms entlang des Halterungsarms (130) verschiebbar ist;
und/oder
wobei der Halterungsarm (130) eine obere und eine untere Halterungsarm-Komponente umfasst, wobei das obere Aufnahme-Element (140) an der obere Halterungsarm-Komponente festgelegt ist, wobei die obere Halterungsarm-Komponente entlang der unteren Halterungsarm-Komponente verschiebbar ist, sodass ein Abstand zwischen dem unteren und dem oberen Aufnahme-Element (120, 140) auf eine Größe oder ein Format des mobilen Endgeräts anpassbar ist, insbesondere, wobei die untere Halterungsarm-Komponente eine Längsführung aufweist und die obere Halterungsarm-Komponente über die Längsführung der unteren Halterungsarm-Komponente entlang des Halterungsarms (130) verschiebbar ist.

12. Halterungsvorrichtung nach einem der vorherigen Ansprüche, wobei das Basiselement (110) und der Halterungsarm (130) lösbar miteinander verbundene Elemente sind und dadurch eine modulare Halterungsvorrichtung bilden.

13. Halterungsvorrichtung nach einem der vorherigen Ansprüche, wobei das untere Aufnahme-Element (120) starr mit dem Basiselement (110) verbunden ist und/oder wobei das Basiselement (110) und das untere Aufnahme-Element (120) zusammen eine T-Form aufweisen.

14. Halterungsvorrichtung nach einem der vorherigen Ansprüche, wobei das untere Aufnahme-Element (120) eine Ausnehmung (124) zur Aufnahme eines Steckers aufweist, wenn dieser in eine Steckerbuchse des von der Halterungsvorrichtung gehaltenen mobilen Endgeräts eingesteckt ist und/oder
wobei das untere Aufnahme-Element (120) mit einem rutschfesten Material ausgestattet ist.

## Claims

1. Holding device (100) for mobile devices for attachment to a control panel of a rail vehicle, comprising
a base element (110) with an upper side (112) and a lower side (114) opposite the upper side, which is adapted at least in sections to the surface contour of the control panel in order to fix the base element (110) to the control panel, the adaptation to the surface contour of the control panel comprises an at least partially curved surface on the lower side of the base element;
a support arm (130) which can be fixed to the base element (110),
a lower receiving element (120) fixed to the base element (110) and designed to grip around a first edge of a mobile device (150);
an upper receiving element (140) arranged on the support arm (130), which is designed to grip around a second edge of the mobile terminal device opposite the first edge,
wherein for holding the mobile device it is clampable by means of the lower receiving element (120) and the upper receiving element (140).

2. Holding device according to one of the preceding claims, wherein the support arm (130) is movably connected to the base element (110) and is lockable in a desired position relative to the base element (110).

3. Holding device according to one of the preceding claims, wherein the support arm (130) is translationally displaceable along the upper side (112) of the base element (110) and/or adjustable in an inclination.

4. Holding device according to one of the preceding claims, wherein either the support arm (130) or the upper side (112) of the base element (110) comprises a groove (134) and the respective other element comprises an elongated rail (118) engaging into the groove, wherein the support arm (130) is translationally displaceable along the rail (118) engaging into the groove (134).

5. Holding device according to one of the preceding claims, wherein the support arm (130) has an elongate hole and the base element (110) has a fastening element engaging through the elongate hole, and the support arm (130) is displaceable along the upper side (112) of the base element (110) and is fixable at different positions on the base element (110) by means of the fastening element.

6. Holding device according to one of the preceding claims, wherein the upper receiving element (140) extends beyond the lower receiving element (120), so that a mobile device clamped between the upper receiving element (140) and the lower receiving element (120) is inclined at an angle β with respect to the upper side (112) of the base element (110).

7. Holding device according to one of the preceding claims, wherein the support arm (130) extends obliquely away from the base element (110), so that the support arm (130) and the upper side of the base element (110) enclose an acute angle (α), wherein a mobile device (150) clamped between the upper receiving element (140) and the lower receiving element (120) is opposite the acute angle.

8. Holding device according to one of the preceding claims, wherein the support arm (130) is pivotable relative to the upper side (112) of the base element (110), so that an angle α included between the support arm (130) and the base element (110) is variable.

9. Holding device according to one of the preceding claims, wherein the support arm (130) is pivotable via a joint on the base element (110).

10. Holding device according to one of the preceding claims, wherein the lower and/or the upper receiving element (120, 140) for gripping around the edge of the mobile device (150) comprises a groove (122, 142) with a wedge-shaped or trapezoidal inner cross-section and/or wherein the upper receiving element comprises an elastic clamp.

11. Holding device according to one of the preceding claims, wherein the upper receiving element (140) is displaceable along the support arm (130), so that a distance between the lower and the upper receiving element (120, 140) is adaptable to a size or format of the mobile device, in particular, wherein the support arm (130) has a longitudinal guide (132) and the upper receiving element (140) is displaceable along the support arm (130) via the longitudinal guide (132) of the support arm;
and/or
wherein the support arm (130) comprises an upper and a lower support arm component, wherein the upper receiving element (140) is fixed to the upper support arm component, wherein the upper support arm component is displaceable along the lower support arm component so that a distance between the lower and the upper receiving element (120, 140) is adaptable to a size or a format of the mobile terminal device, in particular, wherein the lower support arm component has a longitudinal guide and the upper support arm component is displaceable along the support arm (130) via the longitudinal guide of the lower support arm component.

12. Holding device according to one of the preceding claims, wherein the base element (110) and the support arm (130) are detachably connected elements and thereby form a modular holding device.

13. Holding device according to one of the preceding claims, wherein the lower receiving element (120) is rigidly connected to the base element (110) and/or wherein the base element (110) and the lower receiving element (120) together have a T-shape.

14. Holding device according to one of the preceding claims, wherein the lower receiving element (120) has a recess (124) for receiving a plug when it is plugged into a plug socket of the mobile device held by the holding device and/or
wherein the lower receiving element (120) is provided with a non-slip material.

## Revendications

1. Dispositif de maintien (100) pour terminaux mobiles pour la fixation sur un pupitre de commande d'un véhicule ferroviaire, présentant :
un élément formant base (110) comportant une face supérieure (112) et une face inférieure (114) opposée à la face supérieure, laquelle face inférieure est adaptée, au moins dans certaines sections, au contour de surface du pupitre de commande, afin de fixer l'élément formant base (110) sur le pupitre de commande, dans lequel l'adaptation au contour de surface du pupitre de commande consiste en une surface incurvée au moins dans certaines sections sur la face inférieure de l'élément formant base ;
un bras de maintien (130) pouvant être fixé à l'élément formant base (110),
un élément de réception inférieur (120) fixé à l'élément formant base (110), lequel élément de réception inférieur est conçu pour entourer un premier bord d'un terminal mobile (150) ;
un élément de réception supérieur (140) disposé sur le bras de maintien (130), lequel élément de réception supérieur est conçu pour entourer un second bord du terminal mobile, lequel second bord est opposé au premier bord,
dans lequel, pour le maintien du terminal mobile, celui-ci est apte à être pincé au moyen de l'élément de réception inférieur (120) et de l'élément de réception supérieur (140).

2. Dispositif de maintien selon l'une des revendications précédentes, dans lequel le bras de maintien (130) est relié de manière mobile à l'élément formant base (110) et peut être bloqué dans une position souhaitée par rapport à l'élément formant base (110).

3. Dispositif de maintien selon l'une des revendications précédentes, dans lequel le bras de maintien (130) peut être déplacé en translation le long de la face supérieure (112) de l'élément formant base (110) et/ou est ajustable en inclinaison.

4. Dispositif de maintien selon l'une des revendications précédentes, dans lequel soit le bras de maintien (130), soit la face supérieure (112) de l'élément formant base (110) présente une rainure (134) et l'autre élément respectif présente un rail (118) allongé venant en prise dans la rainure, dans lequel le bras de maintien (130) peut être déplacé en translation le long du rail (118) venant en prise dans la rainure (134).

5. Dispositif de maintien selon l'une des revendications précédentes, dans lequel le bras de maintien (130) présente un trou oblong et l'élément formant base (110) présente un élément de fixation venant en prise à travers le trou oblong, et le bras de maintien (130) peut être déplacé le long de la face supérieure (112) de l'élément formant base (110) et peut être fixé sur l'élément formant base (110) en différentes positions au moyen de l'élément de fixation.

6. Dispositif de maintien selon l'une des revendications précédentes, dans lequel l'élément de réception supérieur (140) dépasse l'élément de réception inférieur (120) de sorte qu'un terminal mobile pincé entre l'élément de réception supérieur (140) et l'élément de réception inférieur (120) est incliné selon un angle β par rapport à la face supérieure (112) de l'élément formant base (110).

7. Dispositif de maintien selon l'une des revendications précédentes, dans lequel le bras de maintien (130) s'étend obliquement en s'éloignant de l'élément formant base (110) de sorte que le bras de maintien (130) et la face supérieure de l'élément formant base (110) forment un angle aigu (α), dans lequel un terminal mobile (150) pincé entre l'élément de réception supérieur (140) et l'élément de réception inférieur (120) est opposé à l'angle aigu.

8. Dispositif de maintien selon l'une des revendications précédentes, dans lequel le bras de maintien (130) peut pivoter par rapport à la face supérieure (112) de l'élément formant base (110) de sorte qu'un angle α formé entre le bras de maintien (130) et l'élément formant base (110) est variable.

9. Dispositif de maintien selon l'une des revendications précédentes, dans lequel le bras de maintien (130) peut pivoter sur l'élément formant base (110) par l'intermédiaire d'une articulation.

10. Dispositif de maintien selon l'une des revendications précédentes, dans lequel l'élément de réception inférieur et/ou l'élément de réception supérieur (120, 140) présentent une rainure (122, 142) comportant une section transversale interne cunéiforme ou trapézoïdale pour entourer le bord du terminal mobile (150) et/ou dans lequel l'élément de réception supérieur comprend une pince élastique.

11. Dispositif de maintien selon l'une des revendications précédentes, dans lequel l'élément de réception supérieur (140) peut être déplacé le long du bras de maintien (130), de sorte qu'une distance entre l'élément de réception inférieur et l'élément de réception supérieur (120, 140) peut être adaptée à une taille ou à un format du terminal mobile, en particulier dans lequel le bras de maintien (130) présente un guide longitudinal (132) et l'élément de réception supérieur (140) peut être déplacé le long du bras de maintien (130) par l'intermédiaire du guide longitudinal (132) du bras de maintien ;
et/ou
dans lequel le bras de maintien (130) comprend un composant de bras de maintien supérieur et un composant de bras de maintien inférieur, dans lequel l'élément de réception supérieur (140) est fixé au composant de bras de maintien supérieur, dans lequel le composant de bras de maintien supérieur peut être déplacé le long du composant de bras de maintien inférieur, de sorte qu'une distance entre l'élément de réception inférieur et l'élément de réception supérieur (120, 140) peut être adaptée à une taille ou à un format du terminal mobile, en particulier dans lequel le composant de bras de maintien inférieur présente un guide longitudinal et le composant de bras de maintien supérieur peut être déplacé le long du bras de maintien (130) par l'intermédiaire du guide longitudinal du composant de bras de maintien inférieur.

12. Dispositif de maintien selon l'une des revendications précédentes, dans lequel l'élément formant base (110) et le bras de maintien (130) sont des éléments reliés entre eux de manière amovible, formant ainsi un dispositif de maintien modulaire.

13. Dispositif de maintien selon l'une des revendications précédentes, dans lequel l'élément de réception inférieur (120) est relié rigidement à l'élément formant base (110) et/ou dans lequel l'élément formant base (110) et l'élément de réception inférieur (120) présentent conjointement une forme en T.

14. Dispositif de maintien selon l'une des revendications précédentes, dans lequel l'élément de réception inférieur (120) présente un évidement (124) pour la réception d'une fiche lorsque celle-ci est insérée dans une douille du terminal mobile maintenu par le dispositif de maintien, et/ou
dans lequel l'élément de réception inférieur (120) est équipé d'un matériau antidérapant.
